# EUROPEAN PATENT APPLICATION

(11) **EP 4 675 726 A1**
(43) Date of publication of application: **07.01.2026**
(21) Application number: 24763555.0
(22) Date of filing: 07.02.2024
(51) Int. Cl.: H01M 10/04, H01M 4/02, H01M 4/13, H01M 10/0587, H01M 50/538

(54) **SECONDARY BATTERY**

(30) Priority: 28.02.2023 JP 2023030486
(71) Applicant: Panasonic Energy Co., Ltd., Osaka 570-8511 (JP)
(72) Inventor: KITTAKA, Akinobu, Moriguchi-shi, Osaka 570-8511 (JP); ISHIGURO, Tasuku, Moriguchi-shi, Osaka 570-8511 (JP); YASUDA, Shunsuke, Moriguchi-shi, Osaka 570-8511 (JP)
(74) Representative: Eisenführ Speiser
(86) International application number: PCT/JP2024/004137
(87) International publication number: WO 2024/181071

(57) **Abstract**

According to the present invention, a plurality of positive-electrode core exposed sections (11a) are arranged touching one end of the two ends, in the width direction, of a positive electrode (11) and at regular intervals in a longitudinal direction of the positive electrode. The base of each of a plurality of positive electrode tabs (19) is connected to a corresponding positive-electrode core exposed section (11a) and a distal-end side of each of the positive electrode tabs is guided out from the one end of the positive electrode. A plurality of insulating members (15) are provided which cover the positive-electrode core exposed sections (11a) and the bases of the positive electrode tabs (19) and which cover at least a section of a positive-electrode mixture layer (11-2). The plurality of insulating members (15) have a first insulating member (15-1) disposed on an outer peripheral side, and a second insulating member (15-2) disposed on an inner peripheral side. The second insulating member is thicker than the first insulating member.

## Description

### TECHNICAL FIELD

The present disclosure relates to a secondary battery including a winding electrode assembly formed by winding a positive electrode and a negative electrode in a spiral shape with a separator interposed.

### BACKGROUND ART

As secondary batteries, cylindrical secondary batteries are widely used which include a winding electrode assembly formed by winding a positive electrode and a negative electrode in a spiral shape with a separator interposed.

For example, in Patent Literature 1, the winding electrode assembly is made into a conical shape by inclining the terminal end portions of the wound electrodes on the outer circumferential side. As a result, it is stated that insertion into an outer can is facilitated and gas exhaust performance is improved.

### CITATION LIST

### PATENT LITERATURE

PATENT LITERATURE 1: Japanese Unexamined Patent Application Publication No. 2004-296159

### SUMMARY

Incidentally, in such a secondary battery, a positive electrode in the electrode assembly and a positive electrode terminal for external connection are connected through a positive electrode tab, and a negative electrode in the electrode assembly and a negative electrode terminal for external connection are connected through a negative electrode tab. Here, the positive electrode includes a metal core material and a positive electrode mixture layer formed on the surface the metal core material, and the negative electrode includes a metal core material and a negative electrode mixture layer formed on the surface of the metal core material.

There is also known a structure in which a plurality of uncoated portions not coated with the positive electrode mixture layer are formed on one end side of the positive electrode, a core material corresponding to the uncoated portions is connected to the side of base portions of electrode tabs, while far end sides of the positive electrode tabs are connected to a positive electrode terminal through a positive electrode current collector plate.

When such a plurality of positive electrode tabs are formed, the positive electrode mixture layer does not exist on the portions where the positive electrode tabs are formed. Accordingly, when the positive electrode and the negative electrode are wound with a separator interposed, the density varies in a radial direction. In secondary batteries in particular, the electrode assembly expands and contracts as a result of charging and discharging, so that the stress generated in the region where the positive electrode tabs are formed becomes different from the stress generated in other regions. Consequently, there are possibilities that deviation in surface pressure inside the electrode assembly is generated during charging and discharging and causes a difference in displacement amount of electrode plates, which may lead to generation of a gap between the electrode plates or falling of a positive electrode mixture. In addition, undesirable deformation may occur in the electrode plates in the electrode assembly, which may result in uneven charging and discharging. Therefore, there is a demand to suppress the deformation of electrode plates by equalizing the stress of the electrode assembly.

A non-aqueous electrolyte secondary battery according to the present disclosure is a non-aqueous electrolyte secondary battery, including an electrode assembly having a positive electrode and a negative electrode wound with a separator interposed. The positive electrode has a positive electrode core material, a positive electrode mixture layer formed on a surface of the positive electrode core material, and a plurality of positive electrode core material exposed portions where the positive electrode core material is exposed, the positive electrode core material exposed portions are in contact with one end portion out of both end portions of the positive electrode in a width direction and are provided in plurality at prescribed intervals in a longitudinal direction of the positive electrode, base portions of a plurality of positive electrode tabs are connected to the corresponding positive electrode core material exposed portions, while far end sides of the positive electrode tabs are led out from the one end portion, a plurality of insulating members are provided to cover the base portions of the positive electrode tabs and the positive electrode core material exposed portions and to cover at least part of the positive electrode mixture layer, the plurality of insulating members have a first insulating member arranged on an outer circumferential side and a second insulating member arranged on an inner circumferential side, and the second insulating member is thicker than the first insulating member.

When the thickness of the insulating member covering the positive electrode tabs is made different between the inner circumferential side and the outer circumferential side to control the stress applied to the electrode assembly, undesired deformation inside the electrode assembly can be suppressed.

### BRIEF DESCRIPTION OF DRAWING

FIG. 1 is a sectional view of a battery as an example of a power storage device of an embodiment.
FIG. 2 is a view illustrating a winding state of an electrode assembly.
FIG. 3 is a schematic view showing a positive electrode of the electrode assembly in an expanded state, in which (a) indicates the state before an insulating tape is applied and (b) indicates the state after the insulating tape is applied.
FIG. 4 is a longitudinal sectional view showing a positive electrode core material exposed portion in which a positive electrode tab is connected and covered with the insulating tape.
FIG. 5 shows the relationship between Y = (tape thickness)/(positive electrode mixture thickness) and a spot length X.

### DESCRIPTION OF EMBODIMENTS

Hereinafter, an embodiment of the present disclosure will be described with reference to the drawings. It is to be noted that the following embodiment is not intended to limit the present disclosure, and the configurations formed by selectively combining a plurality of examples are also incorporated in the present disclosure.

### [Overall Configuration]

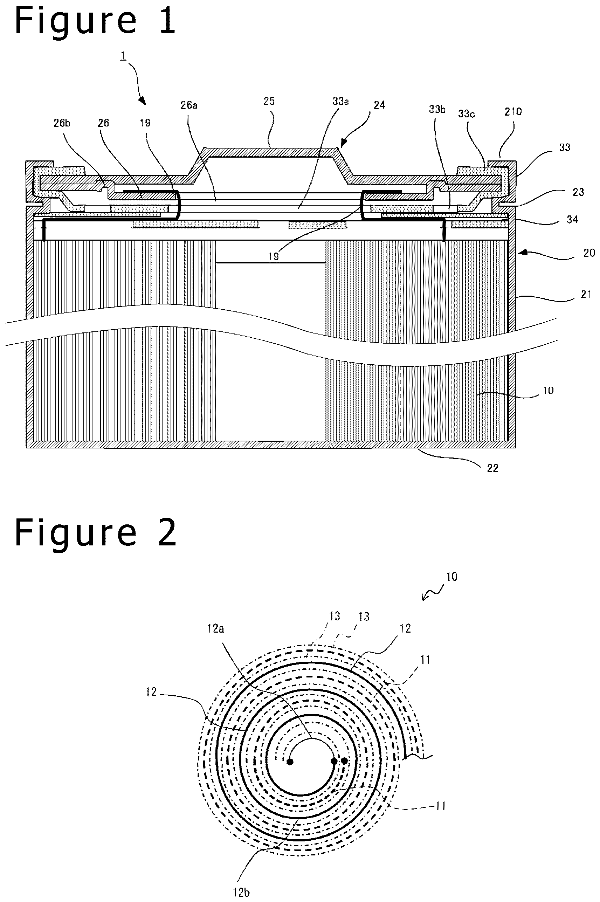

FIG. 1 is a sectional view of a battery 1 as an example of the power storage device of the embodiment. As shown in FIG. 1, the battery 1 includes an electrode assembly 10 and an outer can 20 that houses the electrode assembly 10. The outer can 20 has a cylinder part 21, a bottom portion 22 that seals one end of the cylinder part 21, and an opening portion formed on the other end of the cylinder part, the opening portion being sealed with a sealing member 24. The outer can 20 also houses electrolyte solution together with the electrode assembly 10.

The outer can 20 has an annular groove portion 23 formed on the cylinder part 21, and the sealing member 24 is supported by the groove portion 23 to seal the opening portion of the outer can 20. Hereinafter, for the convenience of description, the side of the sealing member 24 of the battery 1 is defined as an upper side, and the side of the bottom portion 22 of the outer can 20 is defined as a lower side.

The battery 1 further includes a plurality of electrode tabs that extend from each area of the electrode assembly 10 toward the side of the sealing member 24 to directly connect a first electrode constituting the electrode assembly 10 and a current collector plate 26 of the sealing member 24, and an upper insulating plate 34 arranged between the electrode assembly 10 and the sealing member 24. The electrode assembly 10 is a winding type electrode assembly having a first electrode and a second electrode wound with separators interposed. In the present embodiment, the first electrode is a positive electrode, the second electrode is a negative electrode, and the electrode tabs are positive electrode tabs 19. As will be described later, a plurality of the positive electrode tabs 19 are arranged at predetermined intervals in the longitudinal direction of the positive electrode and extend upward from the upper portion of the positive electrode.

The positive electrode tabs 19 electrically connect the positive electrode and the sealing member 24. The negative electrode has a protruding portion electrically connected to the outer can 20 through a negative electrode collector plate. Accordingly, the sealing member 24 functions as a positive electrode terminal, and the outer can 20 functions as a negative electrode terminal. The upper insulating plate 34 prevents the positive electrode and the positive electrode tabs 19 from touching the outer can 20 and also prevents the positive electrode tabs 19 from touching the negative electrode of the electrode assembly 10.

FIG. 2 is a view illustrating the winding state of the electrode assembly 10. The electrode assembly 10 includes a positive electrode 11, a negative electrode 12, and separators 13, which are all band-shaped long members and are stacked alternately in a radial direction of the electrode assembly 10 by being wound in a spiral shape. The negative electrode 12 has a mixture layer, and the mixture layer of the negative electrode 12 is formed with dimensions slightly larger than the mixture layer of the positive electrode 11 to prevent lithium deposition. Specifically, the mixture layer of the negative electrode 12 is formed to be longer in a longitudinal direction and a width direction (short direction) than the mixture layer of the positive electrode 11. In the example in FIG. 2, a start end on the inside of the positive electrode 11 is located outside a start end of the negative electrode 12. In a center portion of the electrode assembly 10, only the negative electrode 12 and the separators 13 are wound. The separators 13 are also formed with dimensions at least slightly larger than the positive electrode 11, and the two separators 13 are arranged to hold the positive electrode 11 therebetween. This allows the separators 13 to be interposed between the positive electrode 11 and the negative electrode 12 when they are wound.

The positive electrode 11 has a band-shaped positive electrode core material and a positive electrode mixture layer that is formed on at least one surface of the core material. As the positive electrode core material, there may be used a foil made of metal that is stable in a potential range of the positive electrode, such as aluminum and aluminum alloy, a film with the metal arranged on its surface layer, or the like. The positive electrode mixture layer preferably contains a positive electrode active material, a conductive agent such as acetylene black, and a binding agent such as polyfluoride vinylidene, and is formed on both the surfaces of the positive electrode core material. As the positive electrode active material, lithium-transition metal mixture oxide is used, for example. The positive electrode tabs 19, which are connected to the positive electrode, are preferably joined to the positive electrode core material directly by welding or the like.

The negative electrode 12 has a band-shaped negative electrode core material and a negative electrode mixture layer that is formed on at least one surface of the core material. As the negative electrode core material, there may be used a foil made of metal that is stable in a potential range of the negative electrode, such as copper and copper alloy, a film with the metal arranged on its surface layer, or the like. The negative electrode mixture layer preferably contains a negative electrode active material and a binding agent such as styrene-butadiene rubber (SBR), and is formed on both the surfaces of the negative electrode core material. As the negative electrode active material, graphite, silicon-containing compounds, and the like are used, for example. Here, a tongue-shaped negative electrode tab may be joined directly to the negative electrode core material by welding or the like and be joined to a current collector plate.

The non-aqueous electrolyte housed in the outer can 20 contains non-aqueous solvent and electrolyte salt dissolved in the non-aqueous solvent. As the non-aqueous solvent, there may be used, for example, esters, ethers, nitriles, amides, and mixed solvent of two or more of the group consisting of these. The non-aqueous solvents may contain halogen substitution products in which at least some of hydrogen in these solvents is substituted with halogen atoms such as fluorine. Examples of the non-aqueous solvents may include ethylene carbonate (EC), ethyl methyl carbonate (EMC), dimethyl carbonate (DMC), and mixed solvent of these. As the electrolyte salt, lithium salt such as LiPF₆ is used, for example.

The outer can 20, which is a bottomed cylindrical metal container with its one axial end (upper end) being opened, has the cylinder part 21 formed in a cylindrical shape and the bottom portion 22 having a circular shape as viewed from the bottom surface. While the outer can 20 is generally made of metal with iron as a main component, the outer can 20 may be made of metal with aluminum or the like as a main component when the outer can 20 is electrically connected to the cathode in particular. The outer can 20 also has the groove portion 23 formed along a circumferential direction of the cylinder part 21. The groove portion 23 is formed in the vicinity of the opening portion of the outer can 20 and at a position prescribed length distanced from an edge portion of the opening (the upper end of the outer can 20). The prescribed length is, for example, a length corresponding to greater than or equal to 1% and less than or equal to 20% of the axial length of the outer can 20.

In the present embodiment, a safety valve mechanism that operates at occurrence of abnormality in the battery 1 is provided at the bottom portion 22 of the outer can 20. On the other hand, the sealing member 24 is not provided with a safety valve mechanism. In the bottom portion 22, a thin-walled portion is formed, for example. When the internal pressure rises due to an abnormality in the battery 1, the thin-walled portion breaks preferentially, and a gas outlet is formed in the bottom portion 22.

The groove portion 23, which is a part of the cylinder part 21 that protrudes toward the inside of the outer can 20, is formed by spinning the cylinder part 21 from the outside, for example. Moreover, at a formation position of the groove portion 23, the diameter of the outer can 20 is reduced, and a thin line-shaped groove is formed on the outer circumferential surface of the cylinder part 21. The groove portion 23 preferably has a substantially U-shape in cross section and is annularly formed over the entire circumferential length of the cylinder part 21. The groove portion 23 is formed by processing the cylinder part 21 after the electrode assembly 10 is housed in the outer can 20.

The inner diameter of the outer can 20 at the formation position of the groove portion 23 is, for example, greater than or equal to 80% and less than or equal to 99% of a maximum inner diameter of the outer can 20. For example, the length of the groove portion 23 along the radial direction of the outer can 20 is 0.5 mm to 2.0 mm. Since the diameter of the electrode assembly 10 is about the same as the maximum inner diameter of the outer can 20, the electrode assembly 10 and the groove portion 23 overlap in an up-down direction of the battery 1. In the present embodiment, the lower ends of the positive electrode tabs 19 are connected to the upper end of the positive electrode at a plurality of points, and the other end is connected to a cap 25 through the current collector plate 26.

The sealing member 24 has the cap 25, the current collector plate 26, and a gasket 33, and is formed as a whole in a disk shape. The sealing member 24 is arranged on the groove portion 23 of the outer can 20 and is fixed to the opening portion of the outer can 20. The upper end of the opening portion is bent inward and is caulked to the sealing member 24 through the gasket 33. In other words, the sealing member 24 is fixed to the upper end portion of the outer can 20 by the groove portion 23 and the caulked portion of the outer can 20, and seals the opening portion of the outer can 20. The caulked portion is annularly formed along the circumference direction of the outer can 20, and holds the sealing member 24 together with the groove portion 23. Note that the sealing member 24 includes the upper insulating plate 34 or other parts to cover the upper opening of the outer can 20.

The cap 25 is a disk-shaped metal member that is exposed to the outside of the outer can 20 to form a top surface of the battery 1. The cap 25 has a shape (raised portion) of a radial center portion protruding to the outside of the battery 1. The cap 25 is connected to wiring materials when the battery 1 is modularized to form a battery pack. Accordingly, the cap 25 functions as an external terminal of the battery 1 and is also called an external terminal or a top cover. In the present embodiment, the current collector plate 26 is connected to the positive electrode tabs 19, and the cap 25 functions as a positive electrode external terminal.

The current collector plate 26, which is a metal member with a diameter similar to that of the cap 25, is located closer to the side of the electrode assembly 10 than to the cap 25. The current collector plate 26 with an opening portion 26a in the radially center portion is formed in an annular shape. The cap 25 and the current collector plate 26 are welded, and the current collector plate 26 is welded at a position closer to an outer circumferential edge than to a radial center of the cap 25, for example. The current collector plate 26 has an annular projection 26b formed as described later, the projection 26b being a portion welded to the cap 25. As mentioned above, the current collector plate 26 is connected to the positive electrode tabs 19 that are linked to the positive electrode of the electrode assembly 10. Therefore, the current collector plate 26 functions as a positive electrode current collector plate.

The gasket 33 is provided on an outer circumferential portion of a stacked body of the cap 25 and the current collector plate 26. The gasket 33 is an annular resin member or rubber member to prevent contact of the cap 25 and the current collector plate 26 with the outer can 20 and to ensure insulation between the outer can 20 and sealing member 24. The gasket 33 covers the upper surface of the cap 25, the side surfaces of the cap 25 and the current collector plate 26, and the lower surface of the current collector plate 26 in the outer circumferential portion of the stacked body. The gasket 33 also fills a gap between the outer can 20 and the sealing member 24 to seal the inside of the battery 1.

The gasket 33 is formed to cover most of the lower surface of the current collector plate 26 and is interspersed between the current collector plate 26 and the upper insulating plate 34. In a radially center portion of the gasket 33, an opening portion 33a is formed so as to overlap with the opening portion 26a of the current collector plate 26 in the up-down direction. The gasket 33 may also have a through-hole 33b formed in an area located below the current collector plate 26. While the electrolyte solution is assumed to accumulate on the upper surface of the gasket 33, providing the through-hole 33b allows the electrolyte solution to return to the side of the electrode assembly 10. There may be a plurality of through-holes 33b along the circumferential direction of the gasket 33, for example. The gasket 33 further has an inner extension portion 33c that extends inward from the outer circumferential portion of the cap 25.

The upper end of the outer can 20 may be bent inward to form a bent portion 210 and be used as a negative electrode external terminal.

### [Configuration of Electrode Assembly]

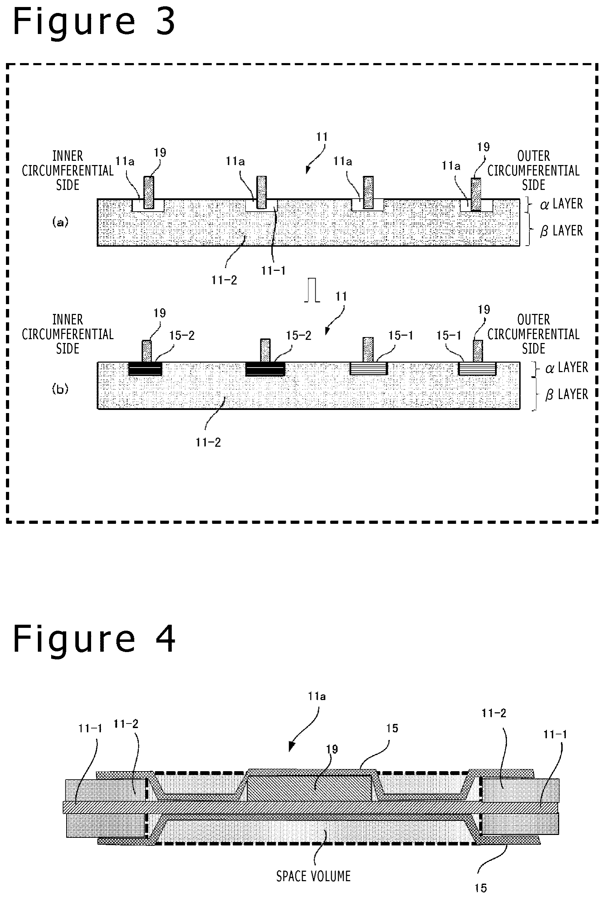

FIG. 3 is a schematic view showing the positive electrode 11 of the electrode assembly 10 in an expanded state, in which (a) indicates the state before an insulating tape is applied and (b) indicates the state after the insulating tape is applied.

The positive electrode 11 is connected to the positive electrode tabs 19 on one end side (upper side) of the positive electrode 11. Here, the positive electrode 11 includes a positive electrode core material 11-1 and a positive electrode mixture layer 11-2 formed on the surface of the positive electrode core material 11-1. The positive electrode tabs 19 are directly connected to the positive electrode core material 11-1. Therefore, on the upper side of the positive electrode 11, positive electrode core material exposed portions 11a without the positive electrode mixture layer 11-2 are formed, and the base portions of the positive electrode tabs 19 are welded to the positive electrode core material exposed portions 11a. The positive electrode tabs 19 extending above the electrode assembly 10 are connected to the current collector plate 26 as shown in FIG. 1. Here, the positive electrode mixture layer 11-2 is formed on both the surfaces of the positive electrode core material 11-1, and the positive electrode core material exposed portions 11a are also formed on both the surfaces. The positive electrode tabs 19 are normally connected to one surface side.

In this way, for a portion (α layer in FIG. 3) on the one end side of the positive electrode 11, it is necessary to form a region where the positive electrode mixture layer 11-2 is not formed. Therefore, for the α layer, the positive electrode mixture layer 11-2 is formed on the positive electrode core material 11-1 by spot intermittent coating (SKC). Specifically, the positive electrode core material exposed portions 11a are formed at prescribed intervals by stopping the coating with the positive electrode mixture layer 11-2 for a predetermined period. Meanwhile, for a β layer of the positive electrode 11 that is other than the α layer, the positive electrode mixture layer 11-2 is formed by continuous coating.

The positive electrode mixture layer 11-2 contains, as described above, a positive electrode active material, a conductive agent such as acetylene black, and a binding agent such as polyfluoride vinylidene, and has a prescribed thickness (for example, less than 1 mm). The positive electrode tabs 19 are made of metal foil, such as aluminum, which is thinner than the positive electrode mixture layer 11-2. Moreover, after the positive electrode tabs 19 are welded to the positive electrode core material 11-1, the base portions of the positive electrode tabs 19 are insulated by applying an insulating member such as an insulating tape 15. As the insulating tape 15, a polyimide insulating tape is used, though an insulating tape made of polypropylene or the like can also be used. The thickness of the insulating tape 15 is usually smaller than that of the positive electrode mixture layer 11-2. The positive electrode tabs 19 and the insulating tape 15 mitigate the thickness reduction due to the positive electrode core material exposed portions 11a.
The average thickness of the α layer becomes somewhat smaller than the average thickness of the β layer, in consideration of the thickness that decreases due to the presence of the positive electrode core material exposed portions 11a and the thickness that increases due to the presence of the positive electrode tabs 19 and the insulating tape 15.

Therefore, when the positive electrode 11, the negative electrode 12, and a separator are wound, the stress during expansion is relatively small in an upper portion of the electrode assembly 10 (a laminated portion of the α layer) where the positive electrode core material exposed portions 11a are present, while the stress increases in a center and lower portions (a laminated portion of the β layer) where the positive electrode core material exposed portions 11a are not present, so that uneven stress is generated. In the wound assembly, force of displacement and radial force received from the outer can 20 increase on the outer circumference side.

Accordingly, when the wound body is loosely wound to reduce the stress, the positive electrode 11 tends to float in the upper portion of the electrode assembly 10 (the laminated portion of the α layer) on the inner circumferential side. On the contrary, when the wound body is tightly wound to increase the stress, buckling may occur in the area other than the upper portion of the electrode assembly 10 (the laminated portion of the β layer) on the outer circumferential side.

In the present embodiment, in order to weld the plurality of positive electrode tabs 19, a thin protective tape is arranged on the outer circumferential portion and a thick protective tape is arranged on the inner circumferential portion in the positive electrode 11 having the positive electrode core material exposed portions 11a. This reduces a gap between the electrodes that is generated in the inner circumferential portion after winding and to suppress buckling in the outer circumferential portion.

Specifically, as indicated in FIG. 3(b), different tapes are adopted as an insulating tape 15-1 on the outer circumferential side corresponding to the first insulating member and an insulating tape (second insulator) 15-2 on the inner circumferential side corresponding to the second insulating member. In other words, a relatively thick tape is adopted as the insulating tape 15-2 on the inner circumferential side and a relatively thin tape is adopted as the insulating tape 15-1 on the outer circumferential side. This suppresses the floating of the positive electrode 11 on the inner circumferential side (generation of the gap between the electrodes) and the buckling of the positive electrode on the outer circumferential side.

Here, in this example, the insulating tapes of two thicknesses are adopted as the insulating tape 15, though the present invention is not limited thereto, and a tape of an intermediate thickness may be adopted for the center portion.

FIG. 4 is a longitudinal sectional view showing the positive electrode core material exposed portion 11a in which the positive electrode tab 19 is connected and coated with the insulating tape 15.

In this way, the positive electrode core material exposed portion 11a is formed by not forming the positive electrode mixture layer 11-2. The base portion of the positive electrode tab 19 is welded to the positive electrode core material 11-1 in the center portion of the positive electrode core material exposed portion 11a. Furthermore, the insulating tape 15 is provided so as to cover the end portion of the positive electrode mixture layer 11-2 on the side of the positive electrode core material exposed portion 11a and to also cover the positive electrode tab 19 and the remaining positive electrode core material exposed portion 11a.

Thus, a space volume obtained by subtracting the volume of the positive electrode tab 19 and the volume of the insulating tape 15 from the total volume of the positive electrode core material exposed portion 11a is equal to the volume of the difference from the portion without the positive electrode core material exposed portion 11a. Here, the total volume of the positive electrode core material exposed portion 11a is equal to the volume in the case where the positive electrode mixture layer 11-2 is present in the same space, and the value of the volume is obtained by multiplying the area of the positive electrode core material exposed portion by the thickness of the positive electrode mixture layer 11-2.

Therefore, the space volume of the difference can be reduced by adopting a thicker tape as the insulating tape 15.

Here, the thickness of the insulating tape 15-2 on the inner circumferential side may be less than or equal to 30% of the thickness of the positive electrode mixture layer 12-2. This is because the insulating tape 15-2 also covers the positive electrode tabs 19, and when the insulating tape 15 is too thick, the thickness of the portion of the positive electrode tabs 19 increases.

The longitudinal length of the positive electrode core material exposed portions 11a may be greater than or equal to 30 mm. This is because the positive electrode tabs 19 need to be connected to the positive electrode core material 11-1 with a certain area in order to reduce its electrical resistance, and so the length described above is preferable in consideration of the ease of connecting operation.

In the present embodiment, in a wound state, the inner insulating tape 15-2 is thickened and the outer insulating tape 15-1 is relatively thinned. This makes it possible to eliminate the uneven stress during expansion and contraction in the electrode assembly 10 and to suppress generation of a gap and buckling.

### [About Experiments]

Table 1 shows the results of examination about the occurrence of floating and buckling in the electrode assembly 10, when the thickness of the insulating tape 15 is varied or the longitudinal length (spot length) of the positive electrode core material exposed portions 11a is varied. Herein, in this specification, "mm³" is expressed as "mm3" for convenience.

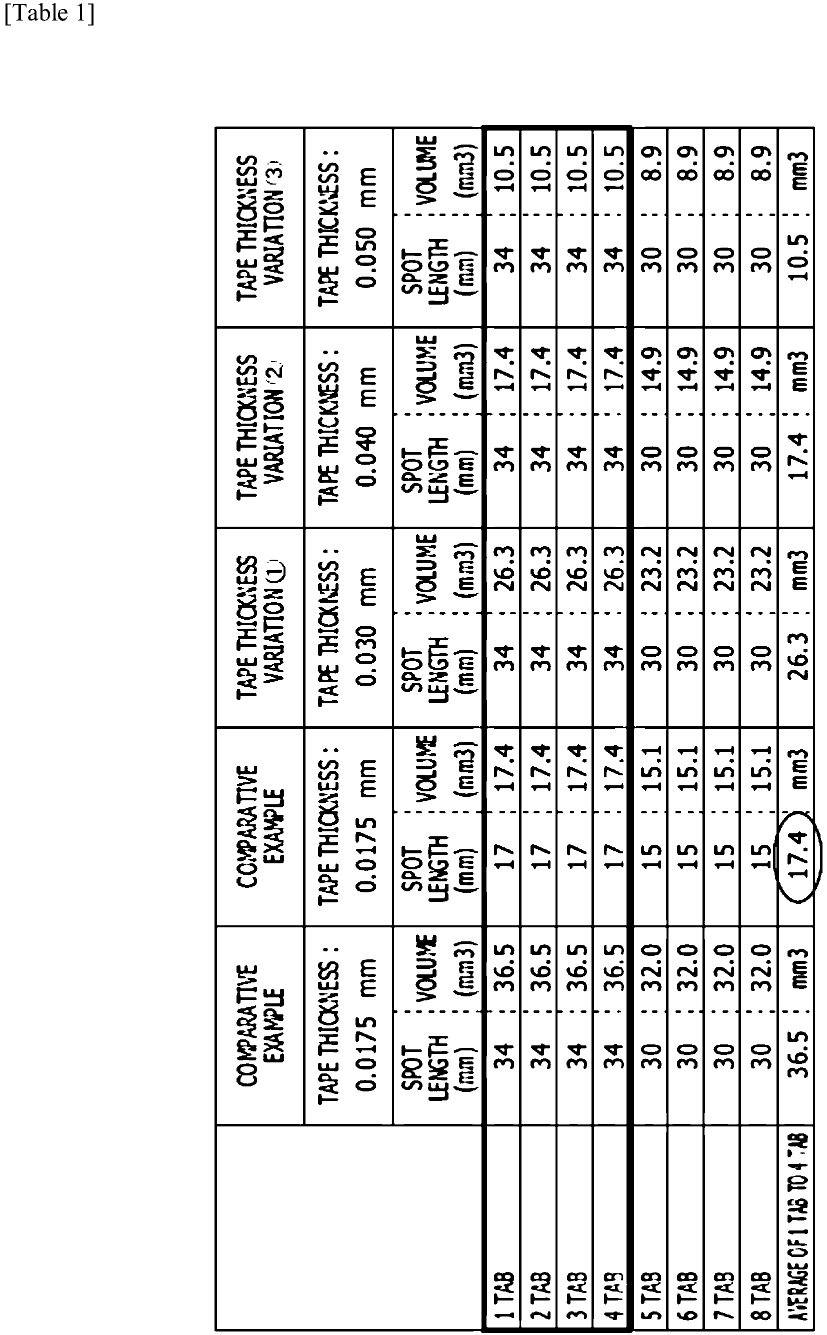

As the thickness of the insulating tape 15 increases, the space volume decreases and the surface pressure increases. Moreover, according to scanning ion microscope (SIM) observation, it was found that no inner circumference gap is generated when an average space volume of four inner positive electrode core material exposed portions 11a (tabs 1 to 4 (Tab1 to Tab4)) is less than or equal to 17.4 mm3.

Next, the space volume of one positive electrode core material exposed portion 11a was fixed to 17.4 mm3, and the tape thickness and the spot length were varied to obtain an appropriate tape thickness condition. It was found that when the spot length is less than or equal to 30 mm, the tape thickness may be less than or equal to 0.040 mm.

**[Table 2]**

| | SPOT LENGTH DECREASED | | SPOT LENGTH REFERENCE | | SPOT LENGTH DOUBLED | |
|---|---|---|---|---|---|---|
| | TAPE THICKNESS : 0.0175 mm | | TAPE THICKNESS : 0.040 mm | | TAPE THICKNESS : 0.055 mm | |
| | SPOT LENGTH (mm) | VOLUME (mm3) | SPOT LENGTH (mm) | VOLUME (mm3) | SPOT LENGTH (mm) | VOLUME (mm3) |
| 1 TAB | 17 | 17.4 | 34 | 17.4 | 68 | 17.4 |
| 2 TAB | 17 | 17.4 | 34 | 17.4 | 68 | 17.4 |
| 3 TAB | 17 | 17.4 | 34 | 17.4 | 68 | 17.4 |
| 4 TAB | 17 | 17.4 | 34 | 17.4 | 68 | 17.4 |
| 5 TAB | 15 | 14.8 | 30 | 15.4 | 60 | 15.4 |
| 6 TAB | 15 | 14.8 | 30 | 15.4 | 30 | 15.4 |
| 7 TAB | 15 | 14.8 | 30 | 15.4 | 30 | 15.4 |
| 8 TAB | 15 | 14.8 | 30 | 15.4 | 30 | 15.4 |
| AVERAGE OF 1 TAB TO 4 TAB | | 17.4 mm3 | | 17.4 mm3 | | 17.4 mm3 |

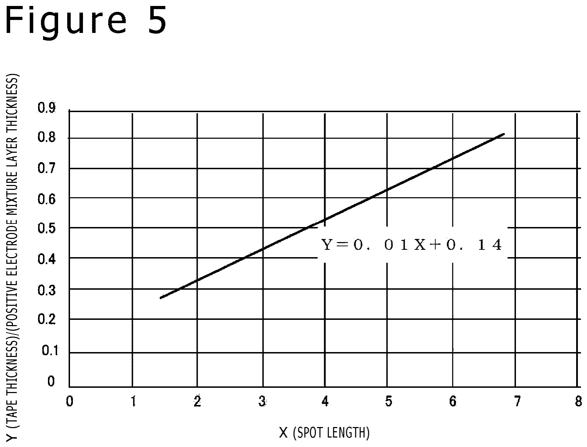

Here, the space volume of the positive electrode core material exposed portions 11a was fixed to 17.4 mm3, and an approximate curve was calculated. The result thereof is shown in FIG. 5.

As shown above, the relationship of Y = 0.01X + 0.14 was obtained when Y = (tape thickness)/(positive electrode mixture thickness), and the spot length = X. Therefore, generation of a gap can be prevented by setting Y to be less than 0.01X + 0.14, with X being set as stated above. Here, since Y is less than 1, generation of a gap in the inner circumference can be prevented by satisfying the condition of 1 < Y < 0.01X + 0.14.

Table 3 shows experimental results when there is a difference in tape thickness between the inner circumferential tabs and the outer circumferential tabs.

**[Table 3]**

| | | 1 | 2 | 3 | 4 | 5 | 6 | 7 |
|---|---|---|---|---|---|---|---|---|
| | | COMPARATIVE EXAMPLE | COMPARATIVE EXAMPLE | COMPARATIVE EXAMPLE | WORKING EXAMPLE | WORKING EXAMPLE | REFERENCE EXAMPLE | WORKING EXAMPLE |
| | | Ref | TAPE VARIATION ⁽¹ | TAPE VARIATION ⁽² | TAPE VARIATION ⁽³ | TAPE VARIATION ⁽⁴ | SPOT LENGTH DECREASED | SPOT LENGTH INCREASED |
| SPOT LENGTH (mm) | Tab 1 | 35 | - | - | - | - | 17 | 70 |
| | Tab 2 | 35 | - | - | - | - | 17 | 70 |
| | Tab 3 | 35 | - | - | - | - | 17 | 70 |
| | Tab 4 | 35 | - | - | - | - | 17 | 70 |
| | Tab 5 | 30 | - | - | - | - | 15 | 60 |
| | Tab 6 | 30 | - | - | - | - | 15 | 60 |
| | Tab 7 | 30 | - | - | - | - | 15 | 60 |
| | Tab 8 | 30 | - | - | - | - | 15 | 60 |
| PROTECTIVE TAPE THICKNESS (mm) | Tab 1 | 0.0175 | 0.03 | 0.05 | 0.03 | 0.05 | 0.0175 | 0.06 |
| | Tab 2 | 0.0175 | 0.03 | 0.05 | 0.03 | 0.05 | 0.0175 | 0.06 |
| | Tab 3 | 0.0175 | 0.03 | 0.05 | 0.03 | 0.05 | 0.0175 | 0.06 |
| | Tab 4 | 0.0175 | 0.03 | 0.05 | 0.03 | 0.05 | 0.0175 | 0.06 |
| | Tab 5 | 0.0175 | 0.03 | 0.05 | 0.0175 | 0.0175 | 0.0175 | 0.0175 |
| | Tab 6 | 0.0175 | 0.03 | 0.05 | 0.0175 | 0.0175 | 0.0175 | 0.0175 |
| | Tab 7 | 0.0175 | 0.03 | 0.05 | 0.0175 | 0.0175 | 0.0175 | 0.0175 |
| | Tab 8 | 0.0175 | 0.03 | 0.05 | 0.0175 | 0.0175 | 0.0175 | 0.0175 |
| GAP BETWEEN ELECTRODES | (100cyc) | 8/10 | 2/10 | 0/10 | 1/10 | 0/10 | 0/10 | 0/10 |
| FOIL BREAK | (100cyc) | 0/10 | 2/10 | 6/10 | 0/10 | 0/10 | 0/10 | 0/10 |
| DETERMINATION | | NG | NG | NG | NG | OK | OK | OK |

As shown above, a gap is generated in comparative example 1 (0.175 mm on the inner circumferential side and 0.175 mm on the outer circumferential side). In comparative example 2 (0.03 mm on the inner circumferential side and 0.03 mm on the outer circumferential side), both the generation of a gap and foil break occur. In comparative example 3 (0.05 mm on the inner circumferential side and 0.05 mm on the outer circumferential side), only the foil break occurs.

In a working example 4 (0.03 mm on the inner circumferential side and 0.175 mm on the outer circumferential side), a gap is generated and therefore "NG" is indicated in Table 3, though in actuality, it was found that the gap is improved, and a limit value is 0.03 mm.

In a working example 5 (0.05 mm on the inner circumferential side and 0.175 mm on the outer circumferential side), both the generation of a gap and the foil break could be eliminated. Moreover, as shown in a working example 7, even when the spot length is increased to greater than or equal to 60 mm and less than or equal to 70 mm, the generation of a gap can be prevented by setting the tape thickness on the inner circumferential side to 0.06 mm.

Note that a reference example 6, in which the spot length is reduced, indicates that as the spot length is shorter, the space volume without the positive electrode mixture layer is smaller, and therefore fewer problems arise.

Here, during the experiments, the thickness of the positive electrode mixture layer is 0.07 mm, the thickness of the core material is 0.015 mm, and the thickness of the positive electrode tabs is 0.070mm.

### [Effects of Embodiment]

When the plurality of positive electrode tabs 19 are provided in the positive electrode 11, the plurality of positive electrode core material exposed portions 11a not coated with the positive electrode mixture are formed by intermittent spot coating. Therefore, when the electrode assembly 10 is formed by winding, there is a possibility that a gap is generated in the inner region. In order to prevent the generation of a gap, the thickness of the insulating tape 15 covering the base portions of the positive electrode tabs 19 was increased. As a result, it was found that foil break occurs on the outer circumferential side.

Accordingly, in the present embodiment, the thickness of the insulating tape 15 on the inner circumferential side is increased, and the insulating tape 15 on the outer circumferential side is made relatively thin. This prevents the generation of a gap between the electrode plates on the inner circumferential side of the electrode assembly 10 while preventing the foil break on the outer circumferential side.

It was found that when, for example, an insulating tape with a thickness of 0.0175 mm is adopted as the insulating tape 15, the inner insulating tape 15 may have a thickness of greater than or equal to 0.03 mm, preferably have a thickness of greater than or equal to 0.04 mm, and more preferably have a thickness of 0.05 mm.

### REFERENCE SIGNS LIST

10 Electrode assembly, 11 Positive electrode, 11-1 Positive electrode core material, 11-2 Positive electrode mixture layer, 11a Positive electrode core material exposed portion, 12 negative electrode, 15 Insulating tape, 15-1 Insulating tape (first insulating member), 15-2 Insulating tape (second insulating member), 19 Positive electrode tab, 20 Outer can, 26 Current collector plate.

## Claims

1. A secondary battery, comprising:
an electrode assembly having a positive electrode and a negative electrode wound with a separator interposed, wherein
the positive electrode has a positive electrode core material, a positive electrode mixture layer formed on a surface of the positive electrode core material, and a plurality of positive electrode core material exposed portions where the positive electrode core material is exposed,
the positive electrode core material exposed portions are in contact with one end portion out of both end portions of the positive electrode in a width direction and are provided in plurality at prescribed intervals in a longitudinal direction of the positive electrode,
base portions of a plurality of positive electrode tabs are connected to the corresponding positive electrode core material exposed portions, while far end sides of the positive electrode tabs are led out from the one end portion,
a plurality of insulating members are provided to cover the base portions of the positive electrode tabs and the positive electrode core material exposed portions and to cover at least part of the positive electrode mixture layer,
the plurality of insulating members have a first insulating member arranged on an outer circumferential side and a second insulating member arranged on an inner circumferential side, and
the second insulating member is thicker than the first insulating member.

2. The secondary battery according to claim 1, wherein
a ratio Y, obtained by dividing a thickness of the first insulating member by a thickness of the positive electrode mixture layer, is 1 >Y> 0.01X + 0.14, where X is a longitudinal length of the positive electrode core material exposed portions.

3. The secondary battery according to claim 2, wherein
the thickness of the second insulating member is less than or equal to 30% of the thickness of the positive electrode mixture layer.

4. The secondary battery according to any one of claims 1 to 3, wherein
a longitudinal length of the positive electrode core material exposed portions is greater than or equal to 30 mm.
